# EUROPEAN PATENT APPLICATION

(11) **EP 4 603 375 A1**
(43) Date of publication of application: **20.08.2025**
(21) Application number: 23903048.9
(22) Date of filing: 07.09.2023
(51) Int. Cl.: B63B 25/08, B63H 21/32, B63J 2/08

(54) **INERT GAS SUPPLY SYSTEM, SHIP, AND INERT GAS SUPPLY METHOD**

(30) Priority: 13.12.2022 JP 2022198359
(71) Applicant: Mitsubishi Shipbuilding Co., Ltd., Tokyo 108-8015 (JP)
(72) Inventor: YANAGISAWA, Hiroyuki, Yokohama-shi, Kanagawa 220-8401 (JP); UNSEKI, Takashi, Yokohama-shi, Kanagawa 220-8401 (JP); OKUDA, Koichi, Yokohama-shi, Kanagawa 220-8401 (JP)
(74) Representative: Studio Torta S.p.A.
(86) International application number: PCT/JP2023/032755
(87) International publication number: WO 2024/127746

(57) **Abstract**

This inert gas supply system is provided in a ship, can supply an inert gas into a tank that can retain crude oil or a refined petroleum product therein, and comprises a carbon dioxide collection part that collects carbon dioxide contained in exhaust gas from a combustion device combusting fuel, and an inert gas supply part that supplies the carbon dioxide collected by the carbon dioxide collection part into the tank as the inert gas.

## Description

### Technical Field

The present disclosure relates to an inert gas supply system, a ship, and an inert gas supply method.

Priority is claimed on Japanese Patent Application No. 2022-198359, filed December 13, 2022, the content of which is incorporated herein by reference.

### Background Art

In a ship that transports a volatile liquid such as crude oil or a petroleum refined product, the volatile liquid may be stored in a tank together with an inert gas.

PTL 1 discloses an inert gas supply system that supplies an inert gas, which is obtained by purifying exhaust gas of an engine or a boiler for ship propulsion, into a tank (cargo tank) of a ship. The inert gas supply system includes an exhaust gas introduction flow path, an exhaust gas purification device, and an inert gas supply flow path. The exhaust gas introduction flow path is connected to an exhaust pipe of an engine or a boiler for ship propulsion. The exhaust gas purification device purifies exhaust gas. The inert gas supply flow path supplies the inert gas generated by the exhaust gas purification device into the tank.

### Citation List

### Patent Literature

[PTL 1] Japanese Unexamined Patent Application Publication No. 2013-193653

### Summary of Invention

### Technical Problem

However, in the configuration as described in PTL 1, an engine or a boiler may be driven only to supply an inert gas into a tank depending on an operation situation of a ship or the like. In addition, it is necessary to drive a fan provided in an inert gas supply flow path in order to supply the inert gas into the tank. Energy such as fuel is required to drive the engine, the boiler, the fan, and the like. In addition, as common issues in international shipping, there are reduction of greenhouse gases (GHG) such as carbon dioxide (CO₂), effective utilization and storage of carbon dioxide. Therefore, in a ship, it is desired to reduce an emission of carbon dioxide by suppressing an energy consumption by the inert gas supply system.

The present disclosure has been made to solve the above problems, and an object of the present disclosure is to provide an inert gas supply system, a ship, and an inert gas supply method capable of suppressing emission of greenhouse gases. Solution to Problem

In order to solve the above problems, according to the present disclosure, there is provided an inert gas supply system that is provided in a ship and capable of supplying an inert gas to a tank capable of storing crude oil or a petroleum refined product. The inert gas supply system includes a carbon dioxide recovery unit, and an inert gas supply unit. The carbon dioxide recovery unit recovers carbon dioxide contained in exhaust gas from a combustion device that combusts fuel. The inert gas supply unit supplies the carbon dioxide recovered by the carbon dioxide recovery unit to the tank as the inert gas.

A ship according to the present disclosure includes a hull, a tank, and the inert gas supply system. The tank is provided in the hull. The tank is capable of storing crude oil or a petroleum refined product.

The inert gas supply method according to the present disclosure is an inert gas supply method in the inert gas supply system. The inert gas supply method includes a step of recovering carbon dioxide and a step of supplying carbon dioxide to a tank. In the step of recovering the carbon dioxide, the carbon dioxide contained in exhaust gas from a combustion device that combusts a fuel is recovered. In the step of supplying the carbon dioxide to the tank, the recovered carbon dioxide is supplied to the tank as an inert gas.

### Advantageous Effects of Invention

According to the inert gas supply system, the ship, and the inert gas supply method of the present disclosure, it is possible to suppress the emission of greenhouse gases.

### Brief Description of Drawings

Fig. 1 is a side view of a floating structure including an inert gas supply system, a ship, and an inert gas supply method according to an embodiment of the present disclosure.
Fig. 2 is a diagram showing a configuration of an inert gas supply system according to a first embodiment of the present disclosure.
Fig. 3 is a flowchart showing a procedure of an inert gas supply method according to each embodiment of the present disclosure.
Fig. 4 is a diagram showing a supply state of an inert gas during navigation of a ship according to the first embodiment of the present disclosure.
Fig. 5 is a diagram showing a supply state of the inert gas during unloading of the ship according to the first embodiment of the present disclosure.
Fig. 6 is a diagram showing a supply state of the inert gas during navigation in ballast of the ship according to the first embodiment of the present disclosure.
Fig. 7 is a diagram showing a discharge state of the inert gas during loading of the ship according to the first embodiment of the present disclosure.
Fig. 8 is a diagram showing a configuration of an inert gas supply system according to a second embodiment of the present disclosure.
Fig. 9 is a diagram showing a supply state of the inert gas during navigation of a ship according to the second embodiment of the present disclosure.
Fig. 10 is a diagram showing a supply state of the inert gas during unloading of the ship according to the second embodiment of the present disclosure.
Fig. 11 is a diagram showing a supply state of the inert gas during navigation in ballast of the ship according to the second embodiment of the present disclosure.
Fig. 12 is a diagram showing a discharge state of the inert gas during loading of the ship according to the second embodiment of the present disclosure.
Fig. 13 is a diagram showing a discharge state of the inert gas of the ship according to the second embodiment of the present disclosure.
Fig. 14 is a diagram showing a configuration of an inert gas supply system according to a third embodiment of the present disclosure.
Fig. 15 is a diagram showing a supply state of the inert gas during navigation of a ship according to the third embodiment of the present disclosure.
Fig. 16 is a diagram showing a supply state of the inert gas during unloading of the ship according to the third embodiment of the present disclosure.
Fig. 17 is a diagram showing a supply state of the inert gas during navigation in ballast of the ship according to the third embodiment of the present disclosure.
Fig. 18 is a diagram showing a discharge state of the inert gas during loading of the ship according to the third embodiment of the present disclosure.
Fig. 19 is another diagram showing the discharge state of the inert gas of the ship according to the third embodiment of the present disclosure.

### Description of Embodiments

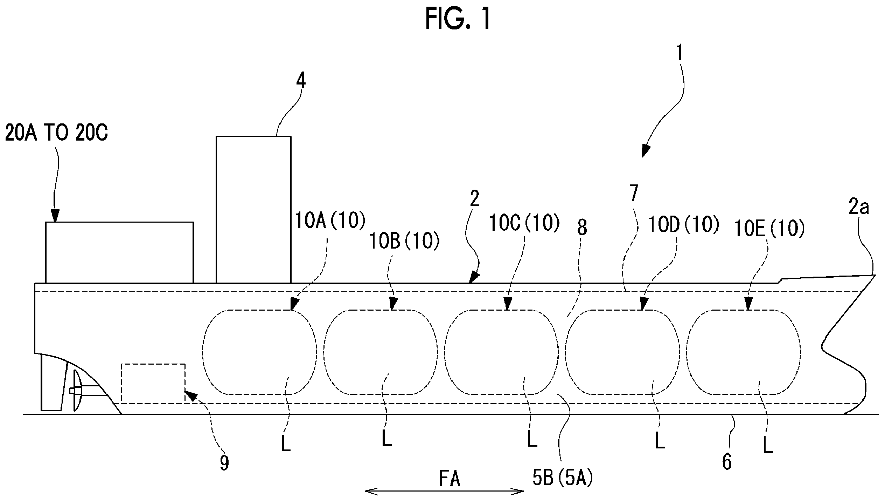

Hereinafter, an inert gas supply system, a ship, and an inert gas supply method according to an embodiment of the present disclosure will be described with reference to Figs. 1 to 19.

### <First Embodiment>

### (Overall Configuration of Ship)

As shown in Fig. 1, a ship 1 of the embodiment of the present disclosure includes at least a hull 2, a superstructure 4, a combustion device 9, a tank 10, and an inert gas supply system 20A. The ship 1 of the embodiment will be described as an example of a ship that can navigate by a main engine or the like. The ship type of the ship 1 is not limited to a specific ship type. Examples of the ship type of the ship 1 include a liquid carrier ship such as a tanker that carries crude oil or a liquid petroleum refined product refined from crude oil. Examples of the petroleum refined products include gasoline, kerosene, naphtha, and methanol.

The hull 2 has a pair of broadsides 5A and 5B forming an outer shell and a bottom 6. The broadsides 5A and 5B include a pair of broadside skins respectively forming right and left broadsides. The bottom 6 includes a bottom skin connecting the broadsides 5A and 5B.

The hull 2 further includes an upper deck 7 that is a through deck which is disposed in an uppermost layer. The superstructure 4 is formed on the upper deck 7. An accommodation space and the like are provided inside the superstructure 4.

In the ship 1 of the embodiment, for example, a cargo tank storage compartment (hold) 8 is formed on the bow 2a side in the bow-stern direction FA with respect to the superstructure 4. The tank 10 is accommodated in the cargo tank storage compartment 8 of the present embodiment.

The combustion device 9 is a device that generates heat energy by combusting a fuel and is provided in the hull 2. Examples of the combustion device 9 include an internal combustion engine used in a main engine for propulsion of the ship 1, an internal combustion engine used in a power generation facility that supplies power into the ship, and a boiler that generates steam as a working fluid.

### (Configuration of Tank Facility)

A plurality of tanks 10 are disposed side by side in the cargo tank storage compartment 8. In the present embodiment, a case where five tanks 10A to 10E are disposed at intervals in the bow-stern direction FA is exemplified. The tank 10 accommodates a liquid L such as crude oil or a petroleum refined product that is in liquid state at room temperature which is refined from crude oil, in the inside of the tank 10. The number and disposition of the tanks 10 disposed in the cargo tank storage compartment 8 are not limited to the above number and disposition. In addition, the shape of the tank 10 is not limited to the shape shown in Fig. 1 and the like.

### (Configuration of Inert Gas Supply System)

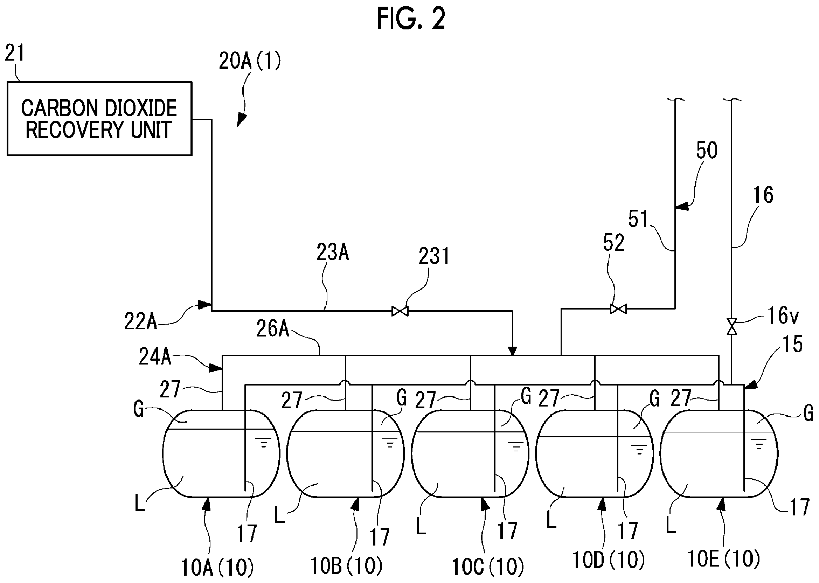

Fig. 2 is a diagram showing a configuration of an inert gas supply system according to a first embodiment of the present disclosure.

As shown in Fig. 2, the ship 1 includes a liquid piping portion 15 for loading and unloading the liquid L for each of the plurality of tanks 10. The liquid piping portion 15 includes a connection pipe 16 and a plurality of branch pipes 17.

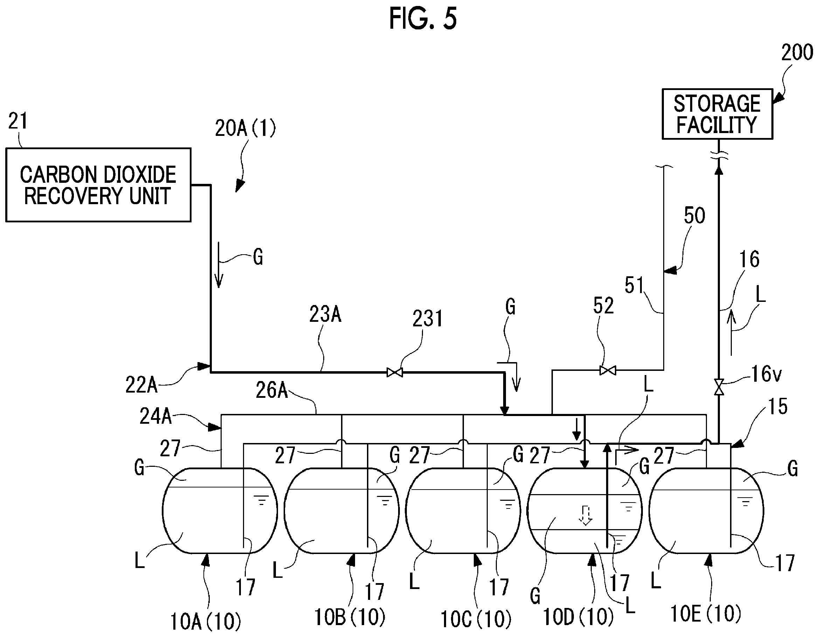

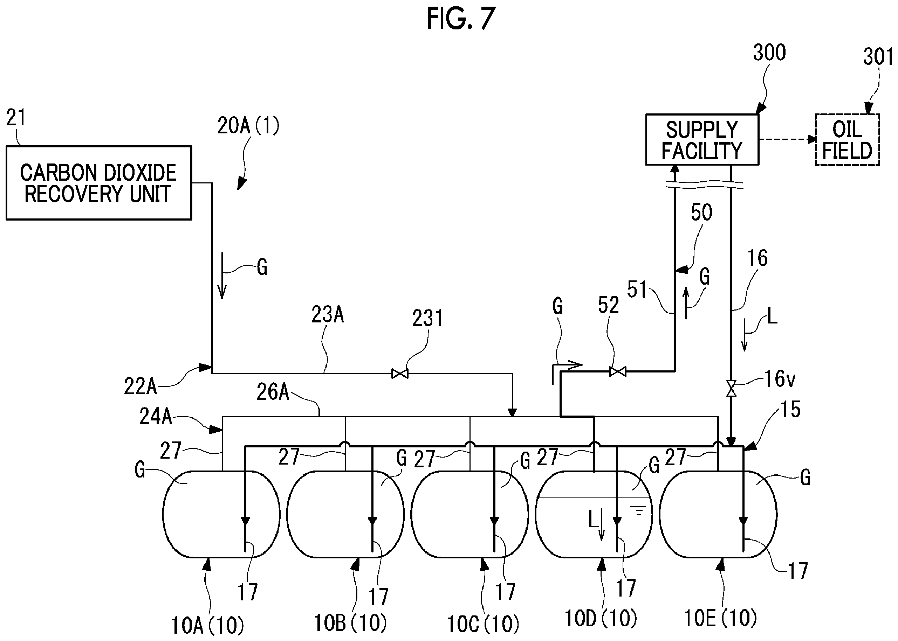

The connection pipe 16 is connected to a bunker station (not shown) or the like, and can be connected to an offshore facility such as a storage facility 200 (refer to Fig. 5) or a supply facility 300 (refer to Fig. 7) outside the ship 1 via the bunker station. An opening-closing valve 16v that interrupts the supply of the liquid L passing through the connection pipe 16 is provided in the middle of the connection pipe 16. In the present embodiment, a case where only one opening-closing valve 16v is provided on a side closer to the bunker station (not shown) than the branch pipe 17 is exemplified. However, the number and the disposition of the opening-closing valve 16v may be such that the supply of the liquid L through the connection pipe 16 can be interrupted, and are not limited to the above configuration.

The plurality of branch pipes 17 are provided so as to allow the inside of each tank 10 and the connection pipe 16 to communicate with each other. Each of the plurality of branch pipes 17 includes a valve that interrupts the flow of the liquid L through the branch pipe 17, and a cargo pump or the like (not shown) for supplying the liquid L to the outside of the tank 10 through the branch pipe 17. The liquid piping portion 15 is not limited to the above-described configuration. For example, a liquid piping portion 15 for loading the liquid L and a liquid piping portion 15 for unloading the liquid L may be provided for each of the plurality of tanks 10.

### (Configuration of Inert Gas Supply System)

The inert gas supply system 20A is capable of supplying the inert gas G to the tank 10. The inert gas supply system 20A includes a carbon dioxide recovery unit 21, an inert gas supply unit 22A, and a carbon dioxide discharge unit 50.

The carbon dioxide recovery unit 21 recovers carbon dioxide in the exhaust gas from the combustion device 9. The inert gas supply system 20A exemplified in the present embodiment is provided on the upper deck 7 of the hull 2. However, the disposition of the inert gas supply system 20A is not limited to the upper deck 7.

Here, as a method for recovering the carbon dioxide contained in the exhaust gas by the carbon dioxide recovery unit 21, a method in which the carbon dioxide contained in the exhaust gas is absorbed by an absorption liquid through a chemical absorption method and then recovered can be used. Examples of the absorption liquid for absorbing the carbon dioxide by the chemical absorption method include monoethanolamine (MEA). When the MEA is heated, the MEA separates the absorbed carbon dioxide in a gas state. Therefore, in the carbon dioxide recovery unit 21, the separated carbon dioxide is recovered. Although a case where the carbon dioxide recovery unit 21 recovers the carbon dioxide by using the chemical absorption method with MEA has been described, the above configuration is not limited as long as the carbon dioxide contained in the exhaust gas can be recovered.

The inert gas supply unit 22A supplies the carbon dioxide recovered by the carbon dioxide recovery unit 21 to the tank 10 as the inert gas G. In the first embodiment of the present disclosure, the inert gas supply unit 22A includes the carbon dioxide supply pipe 23A and the piping portion 24A.

One end of the carbon dioxide supply pipe 23A is connected to the carbon dioxide recovery unit 21. The other end of the carbon dioxide supply pipe 23A is connected to the piping portion 24A. An opening-closing valve 231 is provided in the middle of the carbon dioxide supply pipe 23A. The opening-closing valve 231 interrupts the supply of the carbon dioxide from the carbon dioxide recovery unit 21 through the carbon dioxide supply pipe 23A.

The piping portion 24A includes a connection pipe 26A and a plurality of branch pipes 27.

The connection pipe 26A is connected to the other end of the carbon dioxide supply pipe 23A. The plurality of branch pipes 27 are branch-connected to the connection pipe 26A. The plurality of branch pipes 27 communicate the connection pipe 26A and the gas phase in each tank 10 with each other. Each of the plurality of branch pipes 27 is provided with a valve (not shown) that interrupts the flow of the carbon dioxide passing through the branch pipe 27.

The inert gas supply unit 22A can supply the carbon dioxide recovered by the carbon dioxide recovery unit 21 to each of the plurality of tanks 10 as the inert gas G by opening the opening-closing valve 231 and opening each valve (not shown) of the plurality of branch pipes 27. At this time, the carbon dioxide is supplied to the tank 10 only through the branch pipe 27 in which the valve is open among the plurality of branch pipes 27, and is not supplied to the tank 10 from the branch pipe 27 in which the valve is closed. That is, by individually opening and closing the valves of the plurality of branch pipes 27, it is possible to select the tank 10 that supplies the carbon dioxide and the tank 10 that does not supply the carbon dioxide from the plurality of tanks 10.

The carbon dioxide discharge unit 50 discharges the gas in the gas phase in the tank 10 to the outside of the ship 1. The carbon dioxide discharge unit 50 of the present embodiment includes a discharge pipe 51 and an opening-closing valve 52. One end of the discharge pipe 51 is connected to the connection pipe 26A. The other end of the discharge pipe 51 is connected to a bunker station (not shown) or the like, and can be connected to an offshore facility such as a storage facility 200 (refer to Fig. 5) or a supply facility 300 (refer to Fig. 7) outside the ship 1 via the bunker station. The opening-closing valve 52 interrupts the discharge of the gas passing through the discharge pipe 51.

The gas in the gas phase of the tank 10 can be discharged to the outside of the ship 1 via the carbon dioxide discharge unit 50 by, for example, opening the opening-closing valve 52 and opening the valve (not shown) of the branch pipe 27. At this time, only the branch pipe 27 through which the valve is opened among the plurality of branch pipes 27 is in a state where the gas in the tank 10 can be discharged. That is, by individually opening and closing the valves of the plurality of branch pipes 27, it is possible to select the tank 10 that discharges the gas in the gas phase and the tank 10 that does not discharge the gas in the gas phase from the plurality of tanks 10.

### (Procedure of Inert Gas Supply Method)

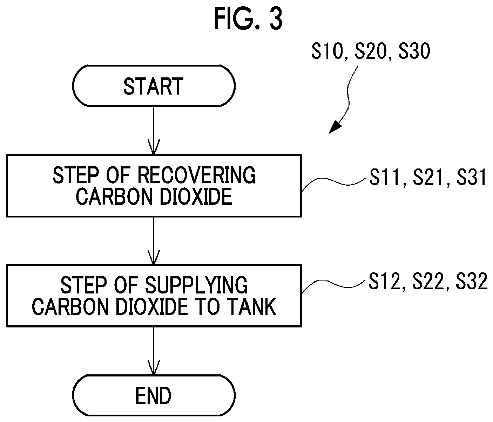

Fig. 3 is a flowchart showing a procedure of an inert gas supply method according to each embodiment of the present disclosure.

As shown in Fig. 3, the inert gas supply method S10 according to the embodiment of the present disclosure includes a step S11 of recovering carbon dioxide and a step S12 of supplying the carbon dioxide to the tank 10.

In step S11 of recovering the carbon dioxide, the carbon dioxide recovery unit 21 recovers the carbon dioxide contained in the exhaust gas from the combustion device 9 that combusts the fuel.

In step S12 of supplying the carbon dioxide to the tank 10, the recovered carbon dioxide is supplied to the tank 10 as the inert gas G. In this case, the opening-closing valve 231 is opened in the inert gas supply unit 22A, and the valves (not shown) of each of the plurality of branch pipes 27 are opened. In this manner, the carbon dioxide recovered by the carbon dioxide recovery unit 21 is supplied as the inert gas G to the gas phase of each of the plurality of tanks 10 from the carbon dioxide recovery unit 21.

### (Supply of Inert Gas During Navigation)

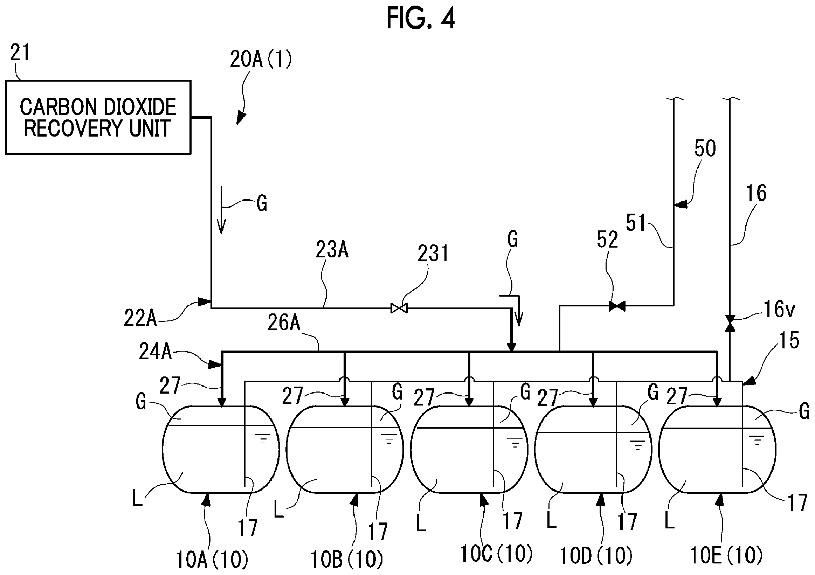

Fig. 4 is a diagram showing a supply state of the inert gas during the ship's navigation.

As shown in Fig. 4, in a case where the ship 1 is navigating in a state where the liquid L is loaded in the tank 10, the inert gas supply unit 22A fills the gas phase of each of the plurality of tanks 10 with the carbon dioxide recovered by the carbon dioxide recovery unit 21 as the inert gas G.

During the navigation of the ship 1, the temperature in the tank 10 fluctuates due to a temperature difference between daytime and nighttime, thermal radiation from sunlight during the daytime, and the like. The pressure in the tank 10 also fluctuates as the temperature in the tank 10 fluctuates. In response to this, the inert gas supply unit 22A supplies (in other words, replenishes) the carbon dioxide into the tank 10 by the inert gas supply method S10 to keep the pressure in the tank 10 at a value equal to or higher than a predetermined value such that the pressure in the tank 10 is lower than the pressure outside the tank 10 and the air outside the tank 10 is not drawn into the tank 10.

### (Supply of Inert Gas During Unloading)

Fig. 5 is a view showing a supply state of an inert gas during unloading of a ship.

As shown in Fig. 5, in a case where the ship 1 unloads the liquid L in the tank 10 to the storage facility 200 provided on land, such as a combination plant, which is a destination for receiving the liquid L such as crude oil or petroleum refined products, the connection pipe 16 of the liquid piping portion 15 is connected to the storage facility 200 via a bunkering station or the like.

In this state, the opening-closing valve 16v of the connection pipe 16 and the valve (not shown) of the branch pipe 17 connected to the tank 10 (in the example of Fig. 4, the tank 10D) for unloading among the plurality of tanks 10 are opened, and the cargo pump of the branch pipe 17 is operated. In this manner, the liquid L in the tank 10 is unloaded to the storage facility 200 through the liquid piping portion 15. In this way, the unloading of the plurality of tanks 10 is sequentially performed.

In this way, when the liquid L in the tank 10 is unloaded to the storage facility 200, the liquid level in the tank 10 gradually decreases in the tank 10 (the tank 10D in the example of Fig. 4) that is unloading the liquid L. The inert gas supply unit 22A supplies the carbon dioxide into the tank 10 by the inert gas supply method S10 described above in accordance with the decrease in the liquid level. That is, the inert gas supply unit 22A supplies carbon dioxide as the inert gas G to the gas phase of the tank 10 (tank 10D in the example of Fig. 4) that is unloading the liquid L. In this case, the opening-closing valve 231 is opened, and the valve (not shown) of the branch pipe 27 of the tank 10 (in the example of Fig. 4, the tank 10D) performing the unloading is opened. Accordingly, the storage amount of the inert gas G in the tank 10 can be increased in accordance with the decrease in the liquid level in the tank 10 performing the unloading. Therefore, the pressure in the tank 10 can be suppressed from decreasing.

### (Supply of Inert Gas During Navigation in Ballast)

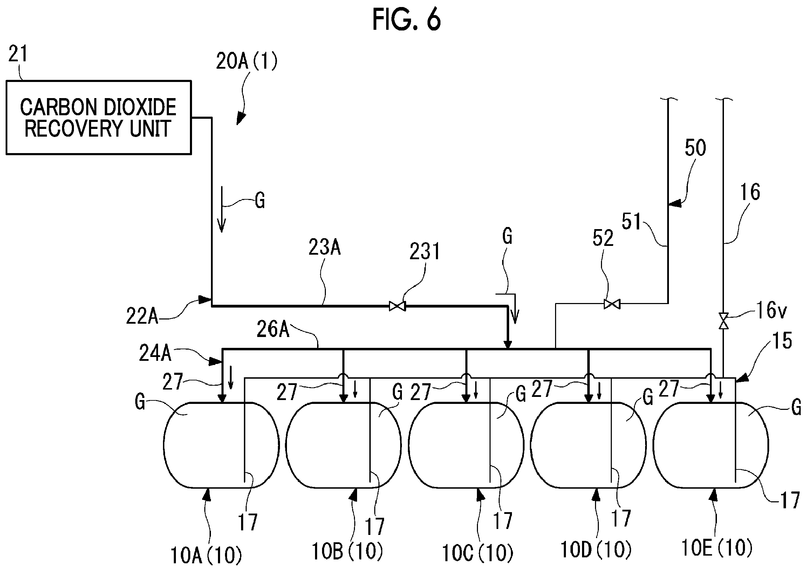

Fig. 6 is a diagram showing a supply state of the inert gas during the ship's navigation in ballast.

As shown in Fig. 6, in a state of an empty load in which the unloading of the liquid L in the tank 10 is completed, the tank 10 is filled with carbon dioxide as the inert gas G. In a case where the ship 1 navigates in an empty load state toward a supply facility 300 (refer to Fig. 7) that is a supply source of the liquid L such as crude oil or petroleum refined products for newly loading the liquid L into the tank 10, a state where the tank 10 is filled with the carbon dioxide as the inert gas G is maintained.

Also in this case, during the navigation of the ship 1, the inert gas supply unit 22A supplies the carbon dioxide into the tank 10 and maintains the carbon dioxide at a value equal to or higher than the predetermined value by the inert gas supply method S10 so that the pressure in the tank 10 does not become lower than the pressure outside the tank 10 due to a temperature difference between daytime and nighttime, thermal radiation due to sunlight during the daytime, or the like, which causes a fluctuation in the temperature in the tank 10.

### (Supply of Inert Gas During Loading)

Fig. 7 is a view showing a discharge state of the inert gas during loading of the ship. As shown in Fig. 7, in a case where the ship 1 loads the liquid L into the tank 10 from the supply facility 300 that serves as a supply source of the liquid L such as crude oil or petroleum refined products, the connection pipe 16 of the liquid piping portion 15 is connected to the supply facility 300 outside the ship 1 via a bunker station (not shown) or the like.

In this state, the opening-closing valve 16v of the connection pipe 16 and a valve (not shown) of the branch pipe 17 are opened, and a pump (not shown) on the supply facility 300 side is operated. In this manner, the liquid L is loaded into the tank 10 from the supply facility 300 through the liquid piping portion 15.

In this way, when the liquid L is loaded into the tank 10 from the supply facility 300, the other end of the discharge pipe 51 is connected to the supply facility 300 via a bunker station (not shown). Then, the opening-closing valve 52 of the discharge pipe 51 is opened, and the valve (not shown) of the branch pipe 27 connected to the tank 10 in which the liquid L is loaded is opened. As the storage amount of the liquid L in the tank 10 increases, the liquid level in the tank 10 gradually rises, and the gas in the gas phase in the tank 10, that is, the inert gas G filled in the tank 10 is pushed out of the tank 10. The pushed out carbon dioxide is discharged to the supply facility 300 through the carbon dioxide discharge unit 50.

Here, the supply facility 300 may be configured to send the gas in the gas phase of the tank 10 (in other words, the inert gas G and the carbon dioxide) discharged from the ship 1 as the inert gas G of the tank (not shown) in which the liquid L is stored in the supply facility 300. In addition, in a case where the supply facility 300 is connected to the oil field 301 from which the crude oil is collected, the gas in the gas phase in the tank 10 discharged from the ship 1 may be sent to the oil field 301.

### (Actions and Effects)

In the inert gas supply system 20A, the ship 1, and the inert gas supply method S10 of the first embodiment, the carbon dioxide contained in the exhaust gas from the combustion device 9 that combusts the fuel is recovered, and the recovered carbon dioxide is supplied to the tank 10 as the inert gas G. In this way, by using the carbon dioxide contained in the exhaust gas as the inert gas G, the carbon dioxide can be effectively used, and it is not necessary to use another inert gas as the inert gas G. Therefore, it is possible to suppress the need to drive an engine, a boiler, a fan, or the like in order to supply the inert gas used as the inert gas G into the tank 10. Therefore, the energy consumption by the inert gas supply system 20A can be suppressed, the energy consumption in the ship 1, in which the available energy is limited, can be suppressed, and the emission of greenhouse gases can be suppressed.

In addition, in the first embodiment, the carbon dioxide is supplied into the tank 10 so that the pressure in the tank 10 does not decrease below the pressure outside the tank 10 due to a fluctuation in the outside air temperature. In this manner, while the gas phase in the tank 10 is filled with the carbon dioxide as the inert gas G, it is possible to suppress a decrease in the pressure of the gas phase in the tank 10.

In addition, in the first embodiment, when crude oil or petroleum refined product is loaded into the tank 10 from the supply facility 300, the carbon dioxide stored in the tank 10 is sent to the supply facility 300 through the carbon dioxide discharge unit 50. In this manner, the carbon dioxide contained in the exhaust gas of the combustion device 9 recovered during the navigation of the ship 1 can be recovered by the supply facility 300 without being released into the atmosphere. In the supply facility 300, the recovered carbon dioxide can be filled as the inert gas G in a tank or the like of the supply facility 300 or can be filled in the oil field 301. Therefore, the amount of the inert gas and the carbon dioxide used in the supply facility 300 can be reduced.

### <Second Embodiment>

Next, a second embodiment of the inert gas supply system, the ship, and the inert gas supply method according to the present disclosure will be described. In the second embodiment described below, only the configuration of the inert gas supply system is different from that of the first embodiment. Therefore, the same parts as those of the first embodiment will be described with the same reference numerals with reference to Figs. 1 and 3, and the redundant description will be omitted.

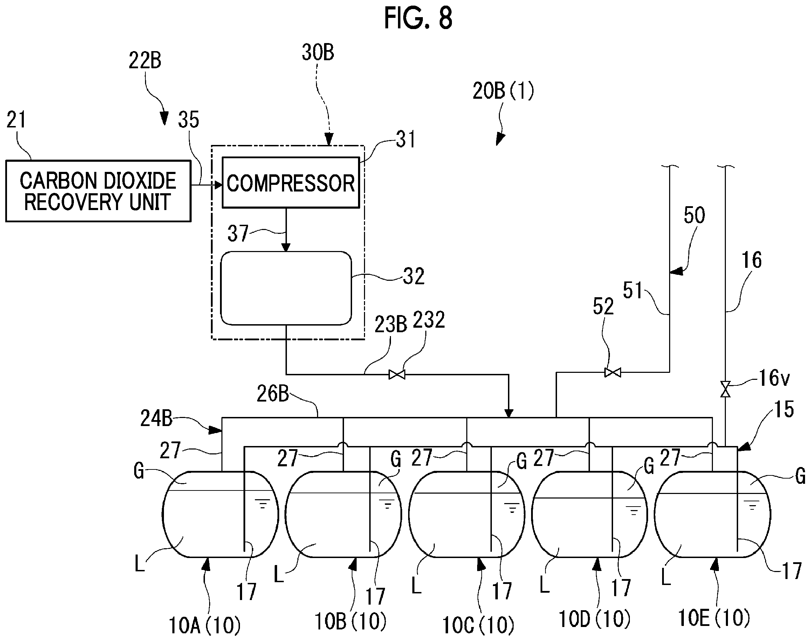

Fig. 8 is a diagram showing a configuration of an inert gas supply system according to the second embodiment of the present disclosure.

As shown in Fig. 8, the inert gas supply system 20B provided in the ship 1 of this embodiment is capable of supplying the inert gas G to the tank 10. The inert gas supply system 20B includes at least the carbon dioxide recovery unit 21, the inert gas supply unit 22B, and the carbon dioxide discharge unit 50.

The inert gas supply unit 22B supplies the carbon dioxide recovered by the carbon dioxide recovery unit 21 to the tank 10 as the inert gas G. In the second embodiment of the present disclosure, the inert gas supply unit 22B includes the carbon dioxide supply pipe 23B, the carbon dioxide storage unit 30B, and the piping portion 24B.

The carbon dioxide storage unit 30B stores the carbon dioxide recovered by the carbon dioxide recovery unit 21. The carbon dioxide storage unit 30B of the second embodiment of the present disclosure includes a compressor 31 and a gaseous carbon dioxide storage tank 32.

The compressor 31 is connected to the carbon dioxide recovery unit 21 via a connection pipe 35. The compressor 31 compresses the carbon dioxide recovered by the carbon dioxide recovery unit 21. The carbon dioxide compressed by the compressor 31 is sent to the gaseous carbon dioxide storage tank 32 through the connection pipe 37.

The gaseous carbon dioxide storage tank 32 stores the carbon dioxide compressed by the compressor 31 in a gas state. The gaseous carbon dioxide storage tank 32 is connected to the piping portion 24B via the carbon dioxide supply pipe 23B. An opening-closing valve 232 is provided in the middle of the carbon dioxide supply pipe 23B. The opening-closing valve 232 interrupts supply of the carbon dioxide from the gaseous carbon dioxide storage tank 32 through the carbon dioxide supply pipe 23B to the plurality of tanks 10.

The piping portion 24B includes a connection pipe 26B and a plurality of branch pipes 27. The connection pipe 26B is connected to the carbon dioxide supply pipe 23B. The plurality of branch pipes 27 are provided to branch from the connection pipe 26B.

The inert gas supply unit 22B can supply the carbon dioxide stored in the gaseous carbon dioxide storage tank 32 to each of the tanks 10 as the inert gas G by opening the opening-closing valve 232 and opening the valves (not shown) of the branch pipes 27 connected to each of the plurality of tanks 10.

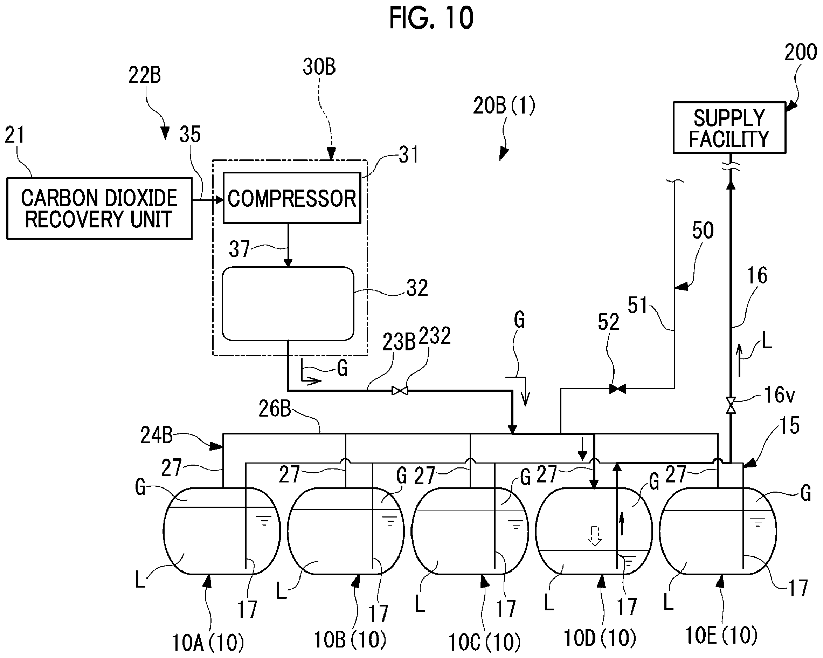

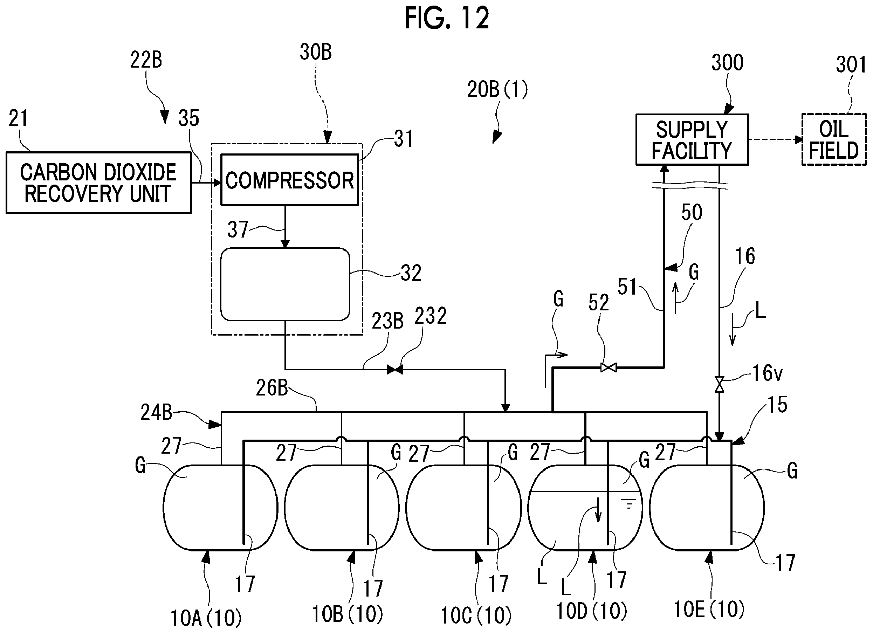

The carbon dioxide discharge unit 50 includes a discharge pipe 51 and an opening-closing valve 52. One end of the discharge pipe 51 is connected to the connection pipe 26B. The other end of the discharge pipe 51 can be connected to an offshore facility such as a storage facility 200 (refer to Fig. 10) and a supply facility 300 (refer to Fig. 12) outside the ship 1 via a bunker station (not shown). An opening-closing valve 52 is provided in the middle of the discharge pipe 51. The opening-closing valve 52 interrupts discharge of the carbon dioxide through the discharge pipe 51.

### (Procedure of Inert Gas Supply Method)

As shown in Fig. 3, the inert gas supply method S20 according to the embodiment of the present disclosure includes a step S21 of recovering carbon dioxide and a step S22 of supplying the carbon dioxide to the tank 10.

In step S21 of recovering the carbon dioxide, the carbon dioxide recovery unit 21 recovers the carbon dioxide contained in the exhaust gas of the combustion device 9. In step S21 of recovering the carbon dioxide, the carbon dioxide recovered by the carbon dioxide recovery unit 21 is further compressed by the compressor 31 and then stored in the gaseous carbon dioxide storage tank 32.

In step S22 of supplying the carbon dioxide to the tank 10, the recovered carbon dioxide is supplied to the tank 10 as the inert gas G. In this case, the opening-closing valve 232 is opened in the inert gas supply unit 22B and the valves (not shown) of each of the plurality of branch pipes 27 are opened. In this manner, the carbon dioxide stored in the gaseous carbon dioxide storage tank 32 is supplied as the inert gas G to the gas phase of each of the plurality of tanks 10 from the carbon dioxide recovery unit 21.

### (Supply of Inert Gas During Navigation)

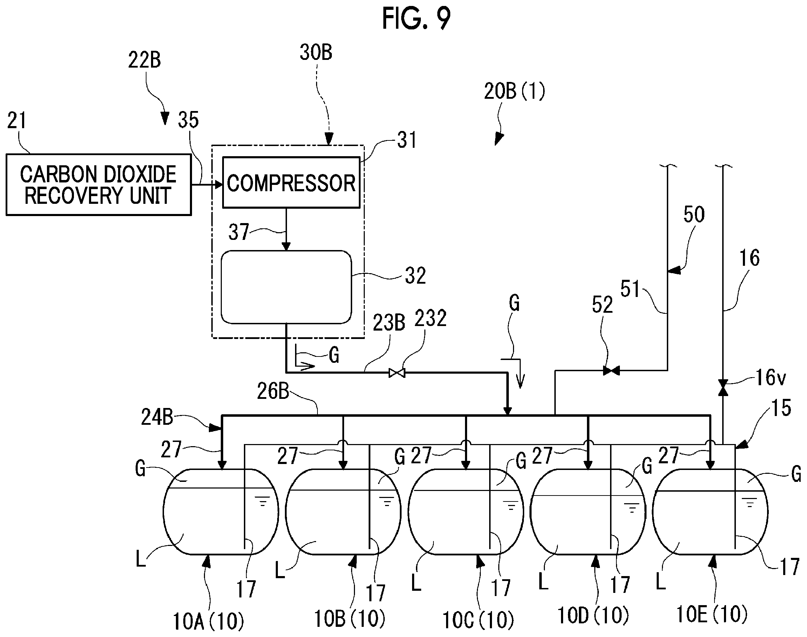

Fig. 9 is a diagram showing a supply state of the inert gas during the ship's navigation. As shown in Fig. 9, in a case where the ship 1 is navigating in a state where the liquid L is loaded in the tank 10, the inert gas supply unit 22B fills the gas phase of each of the plurality of tanks 10 with the carbon dioxide recovered by the carbon dioxide recovery unit 21 as the inert gas G.

In addition, during the navigation of the ship 1, the step S21 of the inert gas supply method S20 is performed, and the carbon dioxide recovered from the exhaust gas of the combustion device 9 is stored in the gaseous carbon dioxide storage tank 32.

In a case where the pressure in the tank 10 is lower than the pressure outside the tank 10 due to a fluctuation in the outside air temperature during the navigation of the ship 1, the inert gas supply unit 22B executes Step S22 of the inert gas supply method S20 and supplies the carbon dioxide stored in the gaseous carbon dioxide storage tank 32 into the tank 10.

### (Supply of Inert Gas During Unloading)

Fig. 10 is a view showing a supply state of an inert gas during unloading of a ship.

As shown in Fig. 10, in a case where the ship 1 unloads the liquid L in the tank 10 to the storage facility 200 provided on land, the connection pipe 16 of the liquid piping portion 15 is connected to the storage facility 200.

In this state, the opening-closing valve 16v of the connection pipe 16 and the valve (not shown) of the branch pipe 17 are opened, and the cargo pump of the branch pipe 17 is operated. In this manner, the liquid L in the tank 10 is unloaded to the storage facility 200 through the liquid piping portion 15.

In this way, when the liquid L in the tank 10 is unloaded to the storage facility 200, the inert gas supply unit 22B executes Step S22 of the inert gas supply method S20 with respect to the tank 10 from which the liquid L is unloaded, and supplies the carbon dioxide stored in the gaseous carbon dioxide storage tank 32 as the inert gas G. In this manner, as the liquid amount of the liquid L in the tank 10 decreases, the storage amount of the inert gas G in the tank 10 can be increased, and the pressure in the tank 10 can be maintained.

### (Supply of Inert Gas During Navigation in Ballast)

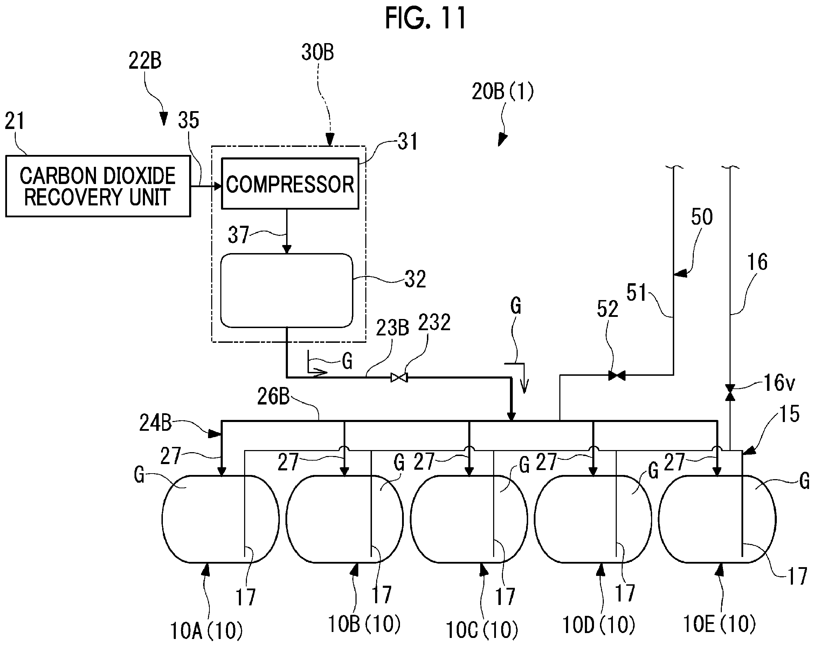

Fig. 11 is a diagram showing a supply state of the inert gas during the ship's navigation in ballast.

As shown in Fig. 11, in a state of an empty load in which the unloading of the liquid L in the tank 10 is completed, the tank 10 is filled with carbon dioxide as the inert gas G. In a case where the ship 1 navigates toward the supply facility 300 in a state of empty load in order to newly load the liquid L into the tank 10, a state where the tank 10 is filled with the carbon dioxide as the inert gas G is maintained.

Also in this case, in a case where the pressure in the tank 10 is lower than the pressure outside the tank 10 due to a fluctuation in the temperature in the tank 10 during the navigation of the ship 1, the inert gas supply unit 22B executes Step S22 and supplies the carbon dioxide stored in the gaseous carbon dioxide storage tank 32 into the tank 10.

### (Supply of Inert Gas During Loading)

Fig. 12 is a view showing a discharge state of the inert gas during loading of the ship.

As shown in the Fig. 12, when the liquid L is loaded into the tank 10 from the supply facility 300, the other end of the discharge pipe 51 is connected to the supply facility 300 via a bunker station (not shown). Then, the opening-closing valve 52 of the discharge pipe 51 is opened, and the valve (not shown) of the branch pipe 27 is opened in the tank 10 (in the example of Fig. 4, the tank 10D) in which the liquid L is loaded into the tank 10. Then, as the storage amount of the liquid L in the tank 10 increases, the gas in the gas phase in the tank 10, that is, the inert gas G filled in the tank 10 is pushed out of the tank 10. The pushed out carbon dioxide is discharged to the supply facility 300 through the carbon dioxide discharge unit 50.

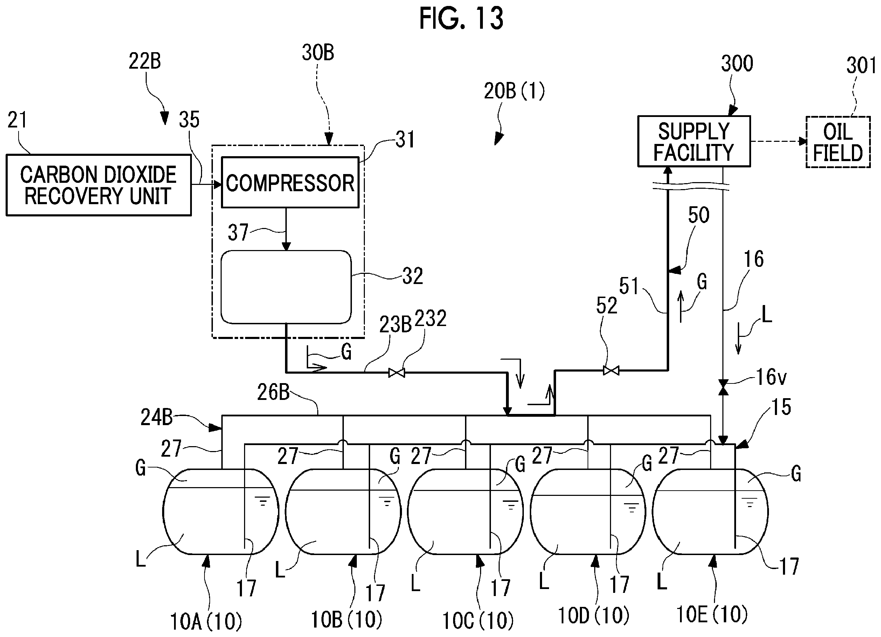

Fig. 13 is another diagram showing the discharge state of the inert gas in the ship.

As shown in Fig. 13, the valve (not shown) of the branch pipe 27 may be closed and the opening-closing valve 232 may be opened before and after the liquid L is loaded into the tank 10 from the supply facility 300. In this way, the carbon dioxide stored in the gaseous carbon dioxide storage tank 32 is discharged to the supply facility 300 through the carbon dioxide discharge unit 50.

Here, the supply facility 300 may be configured to send the gas in the gas phase of the tank 10 (in other words, the inert gas G and the carbon dioxide) discharged from the ship 1 as the inert gas G of the tank (not shown) in which the liquid L is stored in the supply facility 300. In addition, in a case where the supply facility 300 is connected to the oil field 301 from which the crude oil is collected, the carbon dioxide discharged from the ship 1 may be sent to the oil field 301.

### (Actions and Effects)

In the inert gas supply system 20B, the ship 1, and the inert gas supply method S20 of the second embodiment, as in the first embodiment, the energy consumption of the inert gas supply system 20B can be suppressed, and the emission of greenhouse gases can be suppressed.

In addition, in the second embodiment, the carbon dioxide storage unit 30B that stores the carbon dioxide recovered by the carbon dioxide recovery unit 21 is provided. In this manner, the inert gas supply unit 22B can supply the carbon dioxide stored in the carbon dioxide storage unit 30B to the tank 10 as the inert gas G. In this manner, the carbon dioxide contained in the exhaust gas from the combustion device 9 is stored in the carbon dioxide storage unit 30B, and the carbon dioxide can be supplied from the carbon dioxide storage unit 30B to the tank 10 at an appropriate timing as necessary regardless of the operation state of the combustion device 9. In this manner, it is possible to effectively utilize the recovered carbon dioxide while recovering the carbon dioxide contained in the exhaust gas.

In addition, in the second embodiment, the carbon dioxide compressed by the compressor 31 is stored in the gaseous carbon dioxide storage tank 32 in a gas state. In this manner, the carbon dioxide contained in the exhaust gas can be recovered and efficiently stored. Then, the carbon dioxide can be sent from the gaseous carbon dioxide storage tank 32 to the tank 10 at an appropriate timing. At this time, since the carbon dioxide in the gaseous carbon dioxide storage tank 32 is in a gas state, it is possible to quickly send the carbon dioxide into the tank 10 by an amount corresponding to the need for vaporization being eliminated, compared to a case where the carbon dioxide is liquefied and stored.

### <Third Embodiment>

Next, a third embodiment of the inert gas supply system, the ship, and the inert gas supply method according to the present disclosure will be described. In the third embodiment described below, only the configuration of the inert gas supply system is different from that of the first embodiment. Therefore, the same parts as those of the first embodiment will be described with the same reference numerals with reference to Figs. 1 and 3, and the redundant description will be omitted.

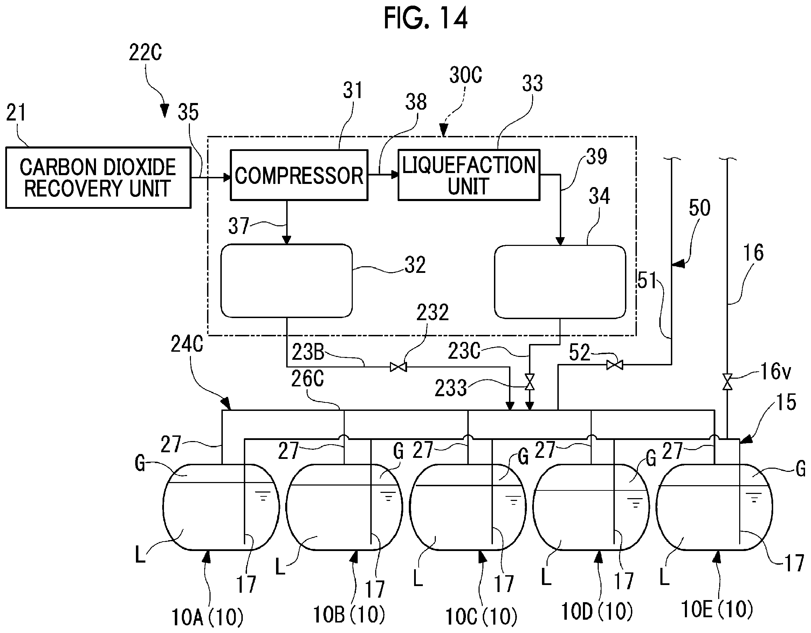

Fig. 14 is a diagram showing a configuration of an inert gas supply system according to the third embodiment of the present disclosure.

As shown in Fig. 14, the inert gas supply system 20C provided in the ship 1 of this embodiment is capable of supplying the inert gas G to the tank 10. The inert gas supply system 20C includes at least the carbon dioxide recovery unit 21, the inert gas supply unit 22C, and the carbon dioxide discharge unit 50.

The inert gas supply unit 22C supplies the carbon dioxide recovered by the carbon dioxide recovery unit 21 to the tank 10 as the inert gas G. The inert gas supply unit 22C of the third embodiment of the present disclosure includes a carbon dioxide storage unit 30C, two carbon dioxide supply pipes 23B and 23C, and a piping portion 24C.

The carbon dioxide storage unit 30C stores the carbon dioxide recovered by the carbon dioxide recovery unit 21. In the third embodiment of the present disclosure, the carbon dioxide storage unit 30C includes the compressor 31, the gaseous carbon dioxide storage tank 32, the liquefaction unit 33, and the liquid carbon dioxide storage tank 34.

The compressor 31 is connected to the carbon dioxide recovery unit 21 via a connection pipe 35. The compressor 31 compresses the carbon dioxide recovered by the carbon dioxide recovery unit 21. A part of the carbon dioxide compressed by the compressor 31 is sent to the gaseous carbon dioxide storage tank 32 through the connection pipe 37. The remainder of the carbon dioxide compressed by the compressor 31 is sent to the liquefaction unit 33 through the connection pipe 38. The supply destination of the carbon dioxide discharged from the compressor 31 may be selectable between the gaseous carbon dioxide storage tank 32 and the liquefaction unit 33 by a plurality of valves (not shown), for example.

The gaseous carbon dioxide storage tank 32 stores the carbon dioxide compressed by the compressor 31 in a gas state. The gaseous carbon dioxide storage tank 32 is connected to the piping portion 24C via the carbon dioxide supply pipe 23B. An opening-closing valve 232 is provided in the middle of the carbon dioxide supply pipe 23B. The opening-closing valve 232 interrupts supply of the carbon dioxide from the gaseous carbon dioxide storage tank 32 through the carbon dioxide supply pipe 23B to the plurality of tanks 10.

The liquefaction unit 33 liquefies the carbon dioxide compressed by the compressor 31. A chiller can be exemplified as the liquefaction unit 33. The liquefaction unit 33 sends the liquefied carbon dioxide to the liquid carbon dioxide storage tank 34 through the connection pipe 39.

The liquid carbon dioxide storage tank 34 stores the carbon dioxide liquefied by the liquefaction unit 33 in a liquid state. The liquid carbon dioxide storage tank 34 is connected to the piping portion 24C via the carbon dioxide supply pipe 23C. An opening-closing valve 233 is provided in the middle of the carbon dioxide supply pipe 23C. The opening-closing valve 233 interrupts the carbon dioxide from the liquid carbon dioxide storage tank 34 through the carbon dioxide supply pipe 23C to the plurality of tanks 10. A vaporization unit (not shown) is provided in the middle of the carbon dioxide supply pipe 23C. The vaporization unit vaporizes the liquefied carbon dioxide sent from the liquid carbon dioxide storage tank 34. As the vaporization unit, a heat exchanger can be exemplified, and as the heat medium of the vaporization unit, an antifreeze liquid heated by steam or the like can be exemplified. Accordingly, the carbon dioxide vaporized through the vaporization unit is supplied to each tank 10.

The piping portion 24C includes a connection pipe 26C and a plurality of branch pipes 27. The connection pipe 26C is connected to the carbon dioxide supply pipe 23B and the carbon dioxide supply pipe 23C. The plurality of branch pipes 27 branch from the connection pipe 26C, respectively.

The inert gas supply unit 22C can vaporize the carbon dioxide stored in the liquid carbon dioxide storage tank 34 by opening the opening-closing valve 233 and opening the valve (not shown) of the branch pipe 27, and then supply the carbon dioxide as the inert gas G to each of the plurality of tanks 10. In addition, the inert gas supply unit 22C can supply the carbon dioxide stored in the gaseous carbon dioxide storage tank 32 as the inert gas G to each of the plurality of tanks 10 by opening the opening-closing valve 232 and opening each of the valves (not shown) of the plurality of branch pipes 27, as in the inert gas supply unit 22B in the second embodiment.

### (Procedure of Inert Gas Supply Method)

As shown in Fig. 3, the inert gas supply method S30 according to the embodiment of the present disclosure includes a step S31 of recovering carbon dioxide and a step S32 of supplying the carbon dioxide to the tank 10.

In step S31 of recovering the carbon dioxide, the carbon dioxide recovery unit 21 recovers the carbon dioxide contained in the exhaust gas of the combustion device 9. In step S31 of recovering the carbon dioxide, the carbon dioxide recovered by the carbon dioxide recovery unit 21 is compressed by the compressor 31 and then a part thereof is stored in the gaseous carbon dioxide storage tank 32. In step S31 of recovering the carbon dioxide, the carbon dioxide recovered by the carbon dioxide recovery unit 21 is compressed by the compressor 31, and then the remainder is liquefied by the liquefaction unit 33 and stored in the liquid carbon dioxide storage tank 34.

In step S32 of supplying the carbon dioxide to the tank 10, the recovered carbon dioxide is supplied to the tank 10 as the inert gas G. In this case, the opening-closing valve 233 is opened in the inert gas supply unit 22C and the valves (not shown) of each of the plurality of branch pipes 27 are opened. In this manner, after the carbon dioxide stored in the liquid carbon dioxide storage tank 34 is vaporized, the carbon dioxide is supplied as the inert gas G to the gas phases of each of the plurality of tanks 10 from the carbon dioxide recovery unit 21. In addition, the opening-closing valve 232 is opened in the inert gas supply unit 22C and the valves (not shown) of each of the plurality of branch pipes 27 are opened. In this manner, the carbon dioxide stored in the gaseous carbon dioxide storage tank 32 can also be supplied as the inert gas G to the gas phases of each of the plurality of tanks 10.

### (Supply of Inert Gas During Navigation)

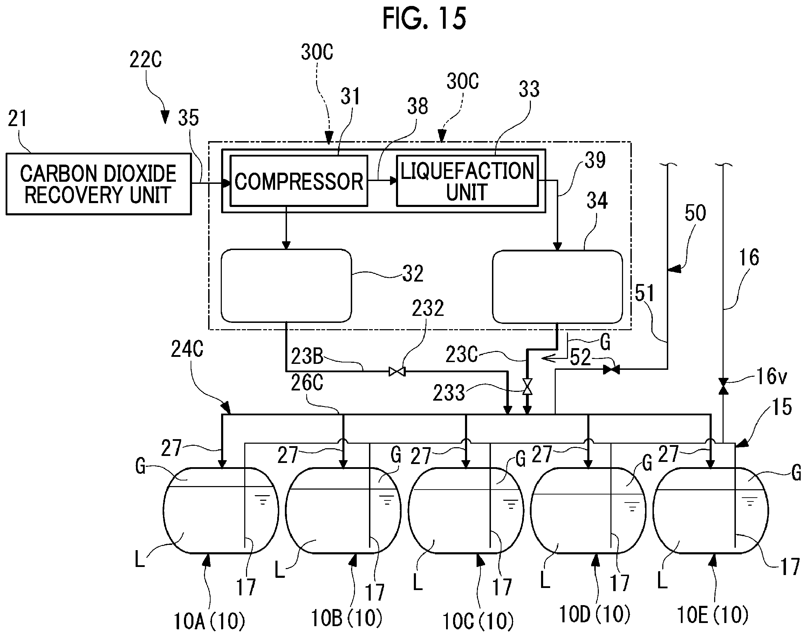

Fig. 15 is a diagram showing a supply state of the inert gas during the ship's navigation.

As shown in Fig. 15, in a case where the ship 1 is navigating in a state where the liquid L is loaded in the tank 10, the inert gas supply unit 22C fills the gas phase of each of the plurality of tanks 10 with the carbon dioxide recovered by the carbon dioxide recovery unit 21 as the inert gas G.

In addition, during the navigation of the ship 1, the step S31 of the inert gas supply method S30 is executed, and the carbon dioxide recovered from the exhaust gas of the combustion device 9 is stored in the gaseous carbon dioxide storage tank 32 and the liquid carbon dioxide storage tank 34, respectively.

During the navigation of the ship 1, in a case where the pressure in the tank 10 is lower than the pressure outside the tank 10 due to a temperature difference between daytime and nighttime, thermal radiation due to sunlight during the daytime, or the like, the inert gas supply unit 22C supplies the carbon dioxide stored in the gaseous carbon dioxide storage tank 32 and the liquid carbon dioxide storage tank 34 into the tank 10 as the inert gas G, by the step S32 of the inert gas supply method S30.

### (Supply of Inert Gas During Unloading)

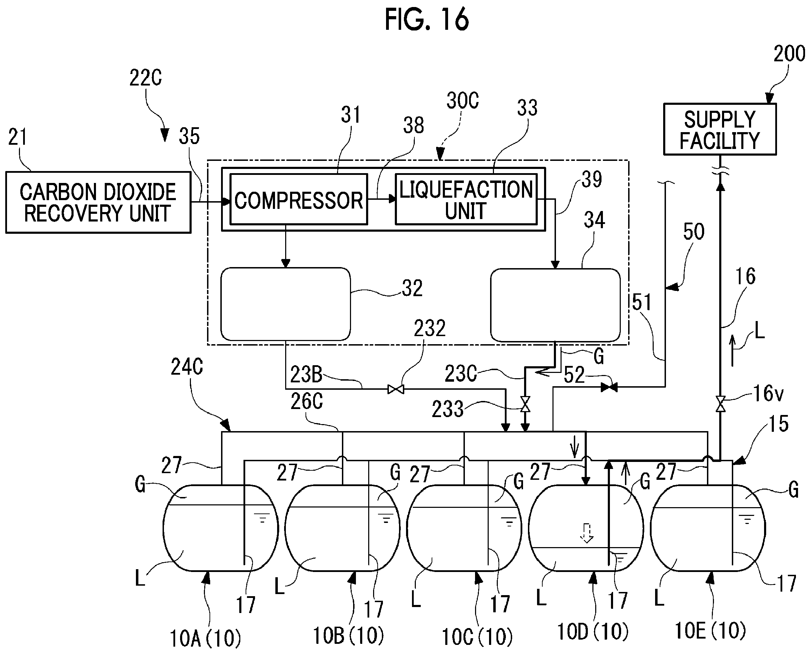

Fig. 16 is a view showing a supply state of an inert gas during unloading of a ship. As shown in Fig. 16, in a case where the ship 1 unloads the liquid L in the tank 10 to the storage facility 200 provided on land, the connection pipe 16 of the liquid piping portion 15 is connected to the storage facility 200.

In this state, the opening-closing valve 16v of the connection pipe 16 and the valve (not shown) of the branch pipe 17 are opened, and the cargo pump of the branch pipe 17 is operated. In this manner, the liquid L in the tank 10 is unloaded to the storage facility 200 through the liquid piping portion 15.

In this way, when the liquid L in the tank 10 is unloaded to the storage facility 200, the inert gas supply unit 22C executes Step S32 of the inert gas supply method S30 with respect to the tank 10 from which the liquid L is unloaded. In this manner, the carbon dioxide stored in the gaseous carbon dioxide storage tank 32 and the liquid carbon dioxide storage tank 34 is supplied to the tank 10 (tank 10D in the example of Fig. 16) that is being unloaded. Therefore, as the liquid amount of the liquid L in the tank 10 decreases (in other words, the liquid level decreases), the storage amount of the inert gas G in the tank 10 can be increased, and the pressure in the tank 10 can be maintained.

### (Supply of Inert Gas During Navigation in Ballast)

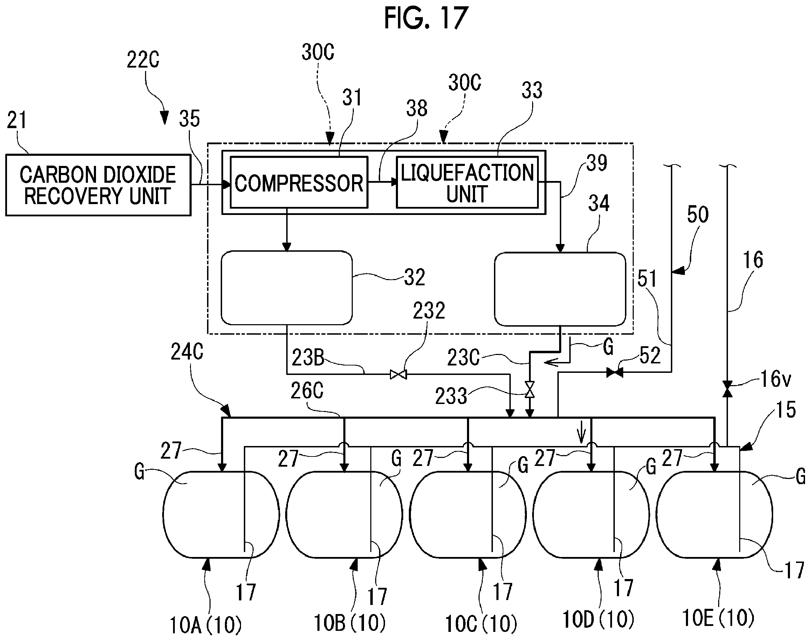

Fig. 17 is a diagram showing a supply state of the inert gas during the ship's navigation in ballast.

As shown in Fig. 17, in a state of an empty load in which the unloading of the liquid L in the tank 10 is completed, the tank 10 is filled with carbon dioxide as the inert gas G. In a case where the ship 1 navigates toward the supply facility 300 in a state of empty load in order to newly load the liquid L into the tank 10, a state where the tank 10 is filled with the carbon dioxide as the inert gas G is maintained.

Also in this case, when the pressure inside the tank 10 is lower than the pressure outside the tank 10 due to a temperature difference between daytime and nighttime, thermal radiation due to sunlight during the daytime, or the like during the navigation of the ship 1, the inert gas supply unit 22C performs Step S32 of the inert gas supply method S30. In this manner, the carbon dioxide stored in the liquid carbon dioxide storage tank 34 is supplied into the tank 10.

### (Supply of Inert Gas During Loading)

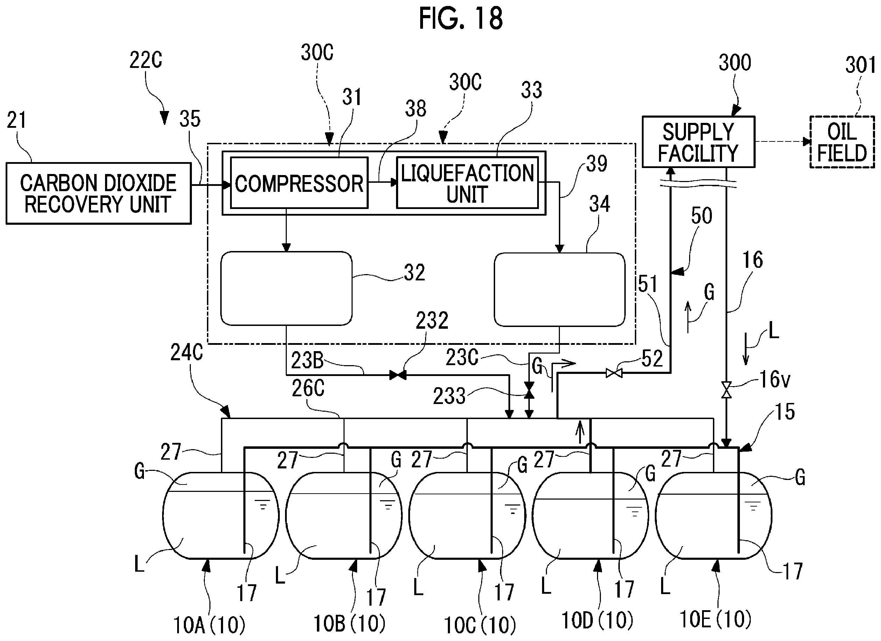

Fig. 18 is a view showing a discharge state of the inert gas during loading of the ship.

As shown in the Fig. 18, when the liquid L is loaded into the tank 10 from the supply facility 300, the other end of the discharge pipe 51 is connected to the supply facility 300 via a bunker station (not shown). Then, the opening-closing valve 52 of the discharge pipe 51 is opened, and the valve (not shown) of the branch pipe 27 is opened in the tank 10 (in the example of Fig. 18, the tank 10D) in which the liquid L is loaded into the tank 10. Then, as the storage amount of the liquid L in the tank 10 increases, the gas in the gas phase in the tank 10, that is, the inert gas G filled in the tank 10 is pushed out of the tank 10. The pushed out carbon dioxide is discharged to the supply facility 300 through the carbon dioxide discharge unit 50.

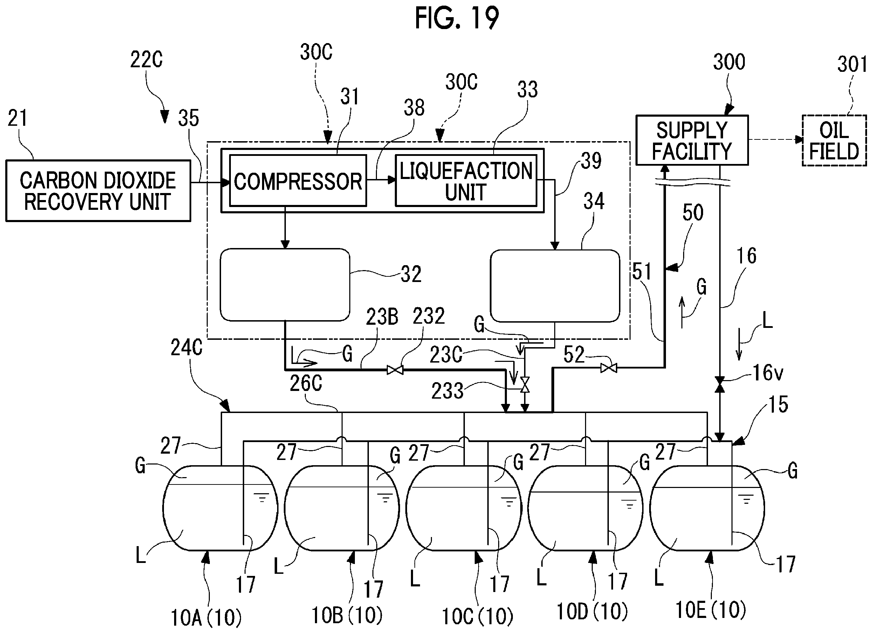

Fig. 19 is another diagram showing the discharge state of the inert gas of the ship.

As shown in Fig. 19, before and after the liquid L is loaded into the tank 10 from the supply facility 300, the valve (not shown) of the branch pipe 27 may be closed, and the opening-closing valve 232 and the opening-closing valve 233 may be opened. In this way, the carbon dioxide stored in the gaseous carbon dioxide storage tank 32 and the liquid carbon dioxide storage tank 34 is discharged to the supply facility 300 through the carbon dioxide discharge unit 50.

Here, as in each of the above-described embodiments, the supply facility 300 may send the gas in the gas phase of the tank 10 discharged from the ship 1 (in other words, the inert gas G and the carbon dioxide) as the inert gas G of the tank (not shown) in which the liquid L is stored in the supply facility 300. In addition, in a case where the supply facility 300 is connected to the oil field 301 from which the crude oil is collected, the carbon dioxide discharged from the ship 1 may be sent to the oil field 301.

### (Actions and Effects)

In the inert gas supply system 20C, the ship 1, and the inert gas supply method S30 of the third embodiment, as in the first and second embodiments, the energy consumption of the inert gas supply system 20C can be suppressed, and the emission of greenhouse gases can be suppressed.

In addition, in the third embodiment, the carbon dioxide storage unit 30C that stores the carbon dioxide recovered by the carbon dioxide recovery unit 21 is provided. In this manner, the inert gas supply unit 22C can supply the carbon dioxide stored in the carbon dioxide storage unit 30C to the tank 10 as the inert gas G. Therefore, the carbon dioxide contained in the exhaust gas of the combustion device 9 can be stored in the carbon dioxide storage unit 30C, and the carbon dioxide can be supplied from the carbon dioxide storage unit 30C to the tank 10 as the inert gas G at an appropriate timing when necessary. Therefore, it is possible to effectively utilize the recovered carbon dioxide while recovering the carbon dioxide contained in the exhaust gas.

In addition, in the third embodiment, the liquefied carbon dioxide is stored in the liquid carbon dioxide storage tank 34 in a liquid state by the liquefaction unit 33. Therefore, it is possible to store more carbon dioxide without expanding a storage space, compared to a case where the carbon dioxide is stored in a gas state. Therefore, it is possible to store more carbon dioxide in a limited space of the ship 1. Further, the carbon dioxide can be sent from the liquid carbon dioxide storage tank 34 to the tank 10 as the inert gas G at an appropriate timing.

### (Other Embodiments)

Above, the embodiments of the present disclosure have been described in detail with reference to the drawings, but the specific configuration is not limited to the embodiments, and includes design changes and the like within a scope not departing from the gist of the present disclosure.

For example, in the second and third embodiments, the carbon dioxide stored in the gaseous carbon dioxide storage tank 32 and the liquid carbon dioxide storage tank 34 is discharged to the supply facility 300. However, the present disclosure is not limited thereto. The carbon dioxide stored in the gaseous carbon dioxide storage tank 32 and the liquid carbon dioxide storage tank 34 may be discharged to the carbon dioxide recovery facility provided in a port or the like. Further, although a case where the supply facility 300 is provided on land has been described, the supply facility 300 may be provided on another ship.

In addition, in the third embodiment, it is also possible to adopt a configuration in which the gaseous carbon dioxide storage tank 32 is not provided.

Further, the configuration of the first embodiment may be combined with the second and third embodiments. More specifically, the configuration in which the carbon dioxide recovered by the carbon dioxide recovery unit 21 is directly sent to the tank 10 through the carbon dioxide supply pipe 23A as in the first embodiment may be added to the configurations of the second and third embodiments.

In addition, in each of the above-described embodiments, a case where the carbon dioxide recovered by the ship 1 is supplied to the tank, the oil field 301, or the like of the supply facility 300 in the supply facility 300 has been described. However, the present disclosure is not limited thereto. In the supply facility 300, a product such as methane or methanol may be generated by using the recovered carbon dioxide and a material obtained from crude oil.

### <Supplementary Notes>

The inert gas supply systems 20A to 20C, the ship 1, and the inert gas supply methods S10, S20, and S30 described in each embodiment are understood as follows, for example.

(1) The inert gas supply system 20A to 20C according to a first aspect is provided in the ship 1 and capable of supplying the inert gas G to the tank 10 capable of storing crude oil or the petroleum refined product, and the inert gas supply system 20A to 20C includes the carbon dioxide recovery unit 21 configured to recover the carbon dioxide contained in the exhaust gas from the combustion device 9 that combusts the fuel, and the inert gas supply unit 22A to 22C configured to supply the carbon dioxide recovered by the carbon dioxide recovery unit 21 to the tank 10 as the inert gas G.

Examples of the combustion device 9 include an internal combustion engine and a boiler.

Examples of the petroleum refined product include gasoline, kerosene, naphtha, and methanol.

The inert gas supply system 20A to 20C recovers carbon dioxide contained in the exhaust gas from the combustion device 9 that combusts the fuel, and supplies the recovered carbon dioxide to the tank 10 as the inert gas G. In this way, by using the carbon dioxide contained in the exhaust gas as the inert gas G, the carbon dioxide can be effectively used, and it is not necessary to use another inert gas as the inert gas G. Therefore, it is possible to suppress the need to drive an engine, a boiler, a fan, or the like in order to supply the inert gas used as the inert gas G into the tank 10. Therefore, energy of a fuel or the like required for driving an engine, a boiler, a fan, or the like to supply the inert gas G to the tank 10 is not required. Therefore, in the ship 1 in which the available energy is limited, the energy consumption can be reduced, and the emission of greenhouse gases can be suppressed.

(2) The inert gas supply system 20B or 20C according to a second aspect is the inert gas supply system 20B or 20C of (1), further including the carbon dioxide storage unit 30B or 30C configured to store the carbon dioxide recovered by the carbon dioxide recovery unit 21, in which the inert gas supply unit 22B or 22C supplies the carbon dioxide stored in the carbon dioxide storage unit 30B or 30C to the tank 10 as the inert gas G.

In such a configuration, the inert gas supply unit 22B or 22C can supply the carbon dioxide stored in the carbon dioxide storage unit 30B or 30C to the tank 10 as the inert gas G by including the carbon dioxide storage unit 30B or 30C that store the carbon dioxide recovered by the carbon dioxide recovery unit 21. In this manner, the carbon dioxide contained in the exhaust gas from the combustion device 9 is stored in the carbon dioxide storage unit 30B or 30C, and the carbon dioxide can be supplied from the carbon dioxide storage unit 30B or 30C to the tank 10 at an appropriate timing when necessary. In this manner, it is possible to effectively utilize the recovered carbon dioxide while recovering the carbon dioxide contained in the exhaust gas.

(3) The inert gas supply system 20B or 20C according to a third aspect is the inert gas supply system 20B or 20C of (2), in which the carbon dioxide storage unit 30B or 30C includes a compressor 31 that compresses the carbon dioxide, and a gaseous carbon dioxide storage tank 32 that stores the carbon dioxide compressed by the compressor 31 in a gas state.

In this manner, the carbon dioxide compressed by the compressor 31 is stored in the gas state in the gaseous carbon dioxide storage tank 32, so that the carbon dioxide contained in the exhaust gas can be recovered and efficiently stored. Then, the carbon dioxide can be sent from the gaseous carbon dioxide storage tank 32 to the tank 10 at an appropriate timing. At this time, since the carbon dioxide in the gaseous carbon dioxide storage tank 32 is in a gas state, it is not necessary to vaporize the carbon dioxide as compared with a case where the carbon dioxide is liquefied, and the carbon dioxide can be quickly sent to the tank 10.

(4) The inert gas supply system 20C according to a fourth aspect is the inert gas supply system 20C of (2) or (3), in which the carbon dioxide storage unit 30C includes a liquefaction unit 33 that liquefies the carbon dioxide, and a liquid carbon dioxide storage tank 34 that stores the carbon dioxide liquefied by the liquefaction unit 33.

In this manner, the carbon dioxide liquefied by the liquefaction unit 33 is stored in the liquid carbon dioxide storage tank 34 in a liquid state, so that more carbon dioxide can be stored in a limited space. Then, the carbon dioxide can be sent from the liquid carbon dioxide storage tank 34 to the tank 10 at an appropriate timing.

(5) The inert gas supply system 20B or 20C according to a fifth aspect is the inert gas supply system 20B or 20C of any one of (2) to (4), in which the inert gas supply unit 22B or 22C supplies the carbon dioxide stored in the carbon dioxide storage unit 30B or 30C to the gas phase in the tank 10 in accordance with a decrease in the level of the liquid phase in the tank 10 in a case where the crude oil or the petroleum refined product is discharged from the tank 10 to the outside of the tank 10.

In this manner, in a case where crude oil or petroleum refined product is discharged from the tank 10 to the outside of the tank 10, the carbon dioxide stored in the carbon dioxide storage unit 30B is supplied to the gas phase in the tank 10 according to a decrease in the level of the liquid phase in the tank 10. In this manner, a state where the gas phase in the tank 10 is filled with the carbon dioxide can be maintained. In addition, after the crude oil or the petroleum refined product is discharged to the outside of the tank 10, the inside of the tank 10 can be filled with the carbon dioxide.

(6) The inert gas supply system 20A to 20C according to a sixth aspect is the inert gas supply system 20A to 20C of any one of (1) to (5), in which the inert gas supply unit 22A to 22C supplies the carbon dioxide into the tank 10 in a case where the pressure in the tank 10 is lower than the pressure outside the tank 10 due to a fluctuation in the outside air temperature.

Accordingly, in a case where the pressure in the tank 10 is lower than the pressure outside the tank 10 due to a fluctuation in the outside air temperature, the pressure of the gas phase in the tank 10 is suppressed from being lowered while the gas phase in the tank 10 is filled with the carbon dioxide by supplying the carbon dioxide into the tank 10.

(7) The inert gas supply system 20A to 20C according to a seventh aspect is the inert gas supply system 20A to 20C of any one of (1) to (6), further including a carbon dioxide discharge unit 50 configured to discharge the carbon dioxide stored in the tank 10 to an outside of the ship 1, and when the crude oil or the petroleum refined product is loaded into the tank 10 from a supply facility 300 for the crude oil or the petroleum refined product provided on the outside of the ship 1, the carbon dioxide stored in the tank 10 is sent to the supply facility 300 through the carbon dioxide discharge unit 50.

According to such a configuration, when crude oil or petroleum refined product is loaded into the tank 10 from the supply facility 300 of crude oil or petroleum refined product, the carbon dioxide stored in the tank 10 is sent to the supply facility 300 through the carbon dioxide discharge unit 50. In this manner, the discharge of the carbon dioxide contained in the exhaust gas from the combustion device 9, which is recovered during the navigation of the ship 1, into the atmosphere is suppressed, and the carbon dioxide can be recovered by the supply facility 300. In the supply facility 300, the recovered carbon dioxide can also be filled as the inert gas G in the supply facility 300 in which crude oil or petroleum refined product loaded in the tank 10 of the ship 1 is stored, an oil field from which crude oil is collected, or the like. Accordingly, it is possible to suppress the need to separately prepare the inert gas used as the inert gas G even on the supply facility 300 side.

(8) The ship 1 according to an eighth aspect includes the hull 2 and the inert gas supply system 20A to 20C of any one of (1) to (7).

In this way, energy consumption in the ship 1 can be suppressed, and the emission of greenhouse gases can be suppressed.

(9) The inert gas supply method S10, S20, or S30 according to a ninth aspect is the inert gas supply method S10, S20, or S30 in the inert gas supply system 20A to 20C of any one of (1) to (7), the method including a step S11 of recovering carbon dioxide contained in an exhaust gas from a combustion device 9 that combusts fuel, and a step S12 of supplying the recovered carbon dioxide to the tank 10 as the inert gas G.

In this manner, the carbon dioxide contained in the exhaust gas from the combustion device 9 that combusts the fuel is recovered, and the recovered carbon dioxide is supplied to the tank 10 as the inert gas G. Accordingly, in the ship 1, energy consumption can be suppressed, and the emission of greenhouse gases can be suppressed.

### Industrial Applicability

According to the inert gas supply system, the ship, and the inert gas supply method of the present disclosure, it is possible to suppress the emission of greenhouse gases.

### Reference Signs List

1: ship
2: hull
2a: bow
4: superstructure
5A, 5B: broadside
6: bottom
7: upper deck
8: cargo tank storage compartment
9: combustion device
10, 10A to 10E: tank
15: liquid piping portion
16: connection pipe
16v: opening-closing valve
17: branch pipe
20A to 20C: inert gas supply system
21: carbon dioxide recovery unit
22A to 22C: inert gas supply unit
23A to 23C: carbon dioxide supply pipe
231 to 233: opening-closing valve
24A to 24C: piping portion
26A to 26C: connection pipe
27: branch pipe
30B, 30C: carbon dioxide storage unit
31: compressor
32: gaseous carbon dioxide storage tank
33: liquefaction unit
34: liquid carbon dioxide storage tank
35, 37, 38, 39: connection pipe
50: carbon dioxide discharge unit
51: discharge pipe
52: opening-closing valve
200: storage facility
300: supply facility
301: oil field
FA: bow-stern direction
G: inert gas
L: liquid
S10, S20, S30: inert gas supply method
S11, S21, S31: step of recovering carbon dioxide
S12, S22, S32: step of supplying carbon dioxide to tank

## Claims

1. An inert gas supply system that is provided in a ship and capable of supplying an inert gas to a tank capable of storing crude oil or a petroleum refined product, the inert gas supply system comprising:
a carbon dioxide recovery unit configured to recover carbon dioxide contained in exhaust gas from a combustion device that combusts fuel; and
an inert gas supply unit configured to supply the carbon dioxide recovered by the carbon dioxide recovery unit to the tank as the inert gas.

2. The inert gas supply system according to Claim 1, further comprising:
a carbon dioxide storage unit configured to store the carbon dioxide recovered by the carbon dioxide recovery unit,
wherein the inert gas supply unit supplies the carbon dioxide stored in the carbon dioxide storage unit to the tank as the inert gas.

3. The inert gas supply system according to Claim 2,
wherein the carbon dioxide storage unit includes
a compressor that compresses the carbon dioxide, and
a gaseous carbon dioxide storage tank that stores the carbon dioxide compressed by the compressor in a gas state.

4. The inert gas supply system according to Claim 2 or 3,
wherein the carbon dioxide storage unit includes
a liquefaction unit that liquefies the carbon dioxide, and
a liquid carbon dioxide storage tank that stores the carbon dioxide liquefied by the liquefaction unit.

5. The inert gas supply system according to Claim 2,
wherein the inert gas supply unit supplies the carbon dioxide stored in the carbon dioxide storage unit to a gas phase in the tank in accordance with a decrease in a level of a liquid phase in the tank in a case where the crude oil or the petroleum refined product is discharged from the tank to an outside of the tank.

6. The inert gas supply system according to Claim 1 or 2,
wherein the inert gas supply unit supplies the carbon dioxide into the tank in a case where a pressure in the tank is lower than a pressure outside the tank due to a fluctuation in an outside air temperature.

7. The inert gas supply system according to Claim 1 or 2, further comprising:
a carbon dioxide discharge unit configured to discharge the carbon dioxide stored in the tank to an outside of the ship,
wherein, in a case where the crude oil or the petroleum refined product is loaded into the tank from a supply facility for the crude oil or the petroleum refined product provided on the outside of the ship, the carbon dioxide stored in the tank is sent to the supply facility through the carbon dioxide discharge unit.

8. A ship comprising:
a hull;
a tank that is provided in the hull and configured to store crude oil or a petroleum refined product; and
the inert gas supply system according to Claim 1 or 2.

9. An inert gas supply method in the inert gas supply system according to Claim 1 or 2, the inert gas supply method comprising:
a step of recovering carbon dioxide contained in exhaust gas from a combustion device that combusts fuel; and
a step of supplying the recovered carbon dioxide to the tank as an inert gas.
